# EUROPEAN PATENT APPLICATION

(11) **EP 4 328 846 A1**
(43) Date of publication of application: **28.02.2024**
(21) Application number: 22841858.8
(22) Date of filing: 15.06.2022
(51) Int. Cl.: G06Q 50/30, B61L 27/12, G06Q 10/04, G16Y 10/40

(54) **OPERATION PROPOSAL SYSTEM AND OPERATION PROPOSAL PRODUCING METHOD**

(30) Priority: 15.07.2021 JP 2021116878
(71) Applicant: Hitachi, Ltd., Tokyo 100-8280 (JP)
(72) Inventor: YONEHARA, Miki, Tokyo 100-8280 (JP); MAYA, Yuzuru, Tokyo 100-8280 (JP); MINAKAWA, Tsuyoshi, Tokyo 100-8280 (JP); MOCHIZUKI, Tomoyuki, Tokyo 100-8280 (JP); MORIBE, Hirotaka, Tokyo 100-8280 (JP)
(74) Representative: Manitz Finsterwald Patent- und Rechtsanwaltspartnerschaft mbB
(86) International application number: PCT/JP2022/023912
(87) International publication number: WO 2023/286514

(57) **Abstract**

A service proposal system that creates a service proposal for transportation means includes a computing device that executes predetermined processing and a storing device accessible by the computing device. The computing device has a stay demand predicting section that predicts stay demands of passengers at the time of transfer, by using a stay demand prediction model, and the computing device has a service proposing section that generates a service proposal for which a service proposal evaluation value is favorable, on the basis of the predicted stay demands.

## Description

### Incorporation by Reference

The present application claims a priority to Japanese Patent Application No. 2021-116878 filed on July 15, 2021, the contents of which are incorporated herein by reference.

### Technical Field

The present invention relates to a service proposal system that creates a service proposal.

### Background Art

Efforts to boost demand in the middle of movement to make revenue, such as an increase of commercial facilities in station yards, are being advanced. Users have also come to sequentially decide a place to satisfy demand and make actions according to the service situation of public transportation instead of satisfying their demands at a place decided in advance. There is known a technique of estimating the length of time necessary for transfer and action patterns from the action history of people in order to recognize actions of people.

The following prior art exists as a background technique of the present technical field. In Patent Document 1 (PCT Patent Publication No. WO2018/087811), a schedule proposal system having a data server that stores information that is collected at a plurality of stations and relates to passengers and a calculation server that stores a program to predict the number of passengers who wait for a vehicle and a program to determine an increase/decrease in the number of vehicles is disclosed. In this schedule proposal system, the calculation server executes the program to predict the number of passengers who wait for a vehicle and the program to determine an increase/decrease in the number of vehicles at a time interval defined in advance for each. The program to predict the number of passengers who wait for a vehicle predicts the number of passengers who wait for a vehicle at a plurality of stations in a predetermined time zone, on the basis of the information relating to the passengers. The program to determine an increase/decrease in the number of vehicles determines whether or not an increase or decrease in the number of vehicles in the predetermined time zone is necessary, on the basis of the number of passengers who wait for a vehicle at the plurality of stations in the predetermined time zone.

### Summary of the Invention

### Problem to be Solved by the Invention

It is difficult to identify small demands that occur in the middle of movement and that rapidly change, from the action history of people by the above-described method. However, prediction of stay demands for shopping or the like according to time to spare for transfer at a transfer station is required.

The present invention addresses the problem of creating a service proposal suitable to stay demands of people that change according to the service situation and the situation of the surroundings.

### Means for Solving the Problem

One representative example of inventions disclosed in the present application is as follows. That is, the one example is a service proposal system that creates a service proposal for transportation means. The service proposal system includes a computing device that executes predetermined processing and a storing device accessible by the computing device. The computing device has a stay demand predicting section that predicts stay demands of passengers at the time of transfer, by using a stay demand prediction model, and the computing device has a service proposing section that generates a service proposal for which a service proposal evaluation value is favorable, on the basis of the predicted stay demands.

### Advantages of the Invention

According to one aspect of the present invention, demands in the middle of movement of people can be estimated with high accuracy, and a service change plan according to the demands can be proposed. Problems, configurations, and effects other than the above-described ones will be made apparent by a description of the following embodiment.

### Brief Description of the Drawings

FIG. 1 is a block diagram illustrating a logical configuration of a service proposal system of an embodiment of the present invention.
FIG. 2 is a block diagram illustrating a physical configuration of the service proposal system.
FIG. 3 is a flowchart of main processing executed by the service proposal system.
FIG. 4 is a flowchart of stay demand prediction model estimation processing.
FIG. 5 is a flowchart of stay demand prediction processing.
FIG. 6 is a flowchart of service proposal creation processing.
FIG. 7 is a diagram illustrating a configuration example of surroundings information stored in a surroundings information accumulating section.
FIG. 8 is a diagram illustrating a configuration example of passenger information (attributes) stored in a passenger information accumulating section.
FIG. 9 is a diagram illustrating a configuration example of passenger information (consumption) stored in the passenger information accumulating section.
FIG. 10 is a diagram illustrating a configuration example of passenger information (movement) stored in the passenger information accumulating section.
FIG. 11 is a diagram illustrating a configuration example of service information stored in a service information accumulating section.
FIG. 12 is a diagram illustrating an example of a movement demand prediction model stored in a movement demand prediction model accumulating section.
FIG. 13 is a diagram illustrating an example of a stay demand prediction model stored in a stay demand prediction model accumulating section.
FIG. 14 is a diagram illustrating an example of a transfer time prediction model stored in a transfer time prediction model accumulating section.
FIG. 15 is a diagram illustrating an example of stay demands predicted by a stay demand predicting section.
FIG. 16 is a diagram illustrating a configuration example of current-day data of the passenger information (movement) stored in the passenger information accumulating section.
FIG. 17 is a diagram illustrating a configuration example of current-day data of the service information stored in the service information accumulating section.
FIG. 18 is a diagram that explains an example of service proposal KPI weighting factors.
FIG. 19 is a diagram that explains an example of a service proposal limiting condition.
FIG. 20 is a diagram illustrating an output example of a service proposal.
FIG. 21 is a diagram illustrating an output example of the service proposal.

### Modes for Carrying Out the Invention

First, an outline of a service proposal system 10 of an embodiment of the present invention will be described. The service proposal system 10 of the present embodiment collects service information, passenger information, and surroundings information of transportation means such as a train and a bus, and estimates stay information from the service information and the passenger information, and movement demand prediction models, stay demand prediction models, and transfer time models from the stay information and the surroundings information. Thereafter, the service proposal system 10 predicts stay demands (stay distribution) from the passenger information of the current day by using the stay demand prediction models and the transfer time prediction models. Further, the service proposal system 10 creates a service proposal for the transportation means that optimizes a service proposal evaluation value (KPI) from the stay distribution, according to service proposal KPI weightings and a service proposal limiting condition.

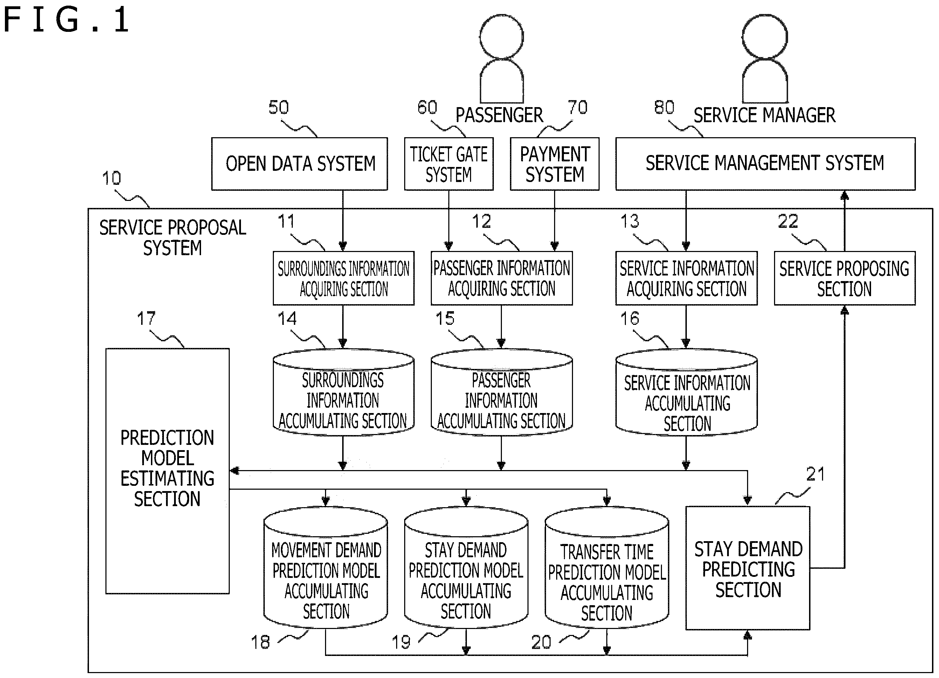

FIG. 1 is a block diagram illustrating a logical configuration of the service proposal system 10 of the embodiment of the present invention.

The service proposal system 10 has a surroundings information acquiring section 11, a passenger information acquiring section 12, a service information acquiring section 13, a surroundings information accumulating section 14, a passenger information accumulating section 15, a service information accumulating section 16, a prediction model estimating section 17, a movement demand prediction model accumulating section 18, a stay demand prediction model accumulating section 19, a transfer time prediction model accumulating section 20, a stay demand predicting section 21, and a service proposing section 22.

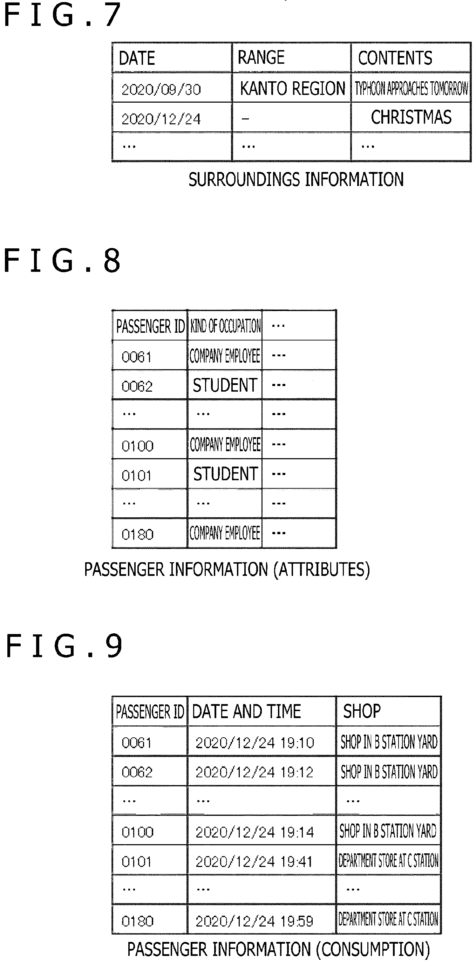

The surroundings information acquiring section 11 acquires the surroundings information (for example, input information for predicting movement demands, which is the weather forecast, information on events on a transportation line, and so forth) acquired from an open data system 50 and stores it in the surroundings information accumulating section 14. The surroundings information stored in the surroundings information accumulating section 14 will be described later with reference to FIG. 7. The open data system 50 is a computer system that provides data that affects actions of people, such as the weather forecast and local information. The surroundings information acquiring section 11 may acquire data provided individually (for example, for value) besides publicly available open data.

The passenger information acquiring section 12 acquires the passenger information from a ticket gate system 60 and a payment system 70 and stores it in the passenger information accumulating section 15. The passenger information stored in the passenger information accumulating section 15 will be described later with reference to FIGS. 8, 9, and 10. The ticket gate system 60 is a computer system that collects entry/exit data obtained by ticket gate machines of a railway and getting-on/off data obtained by fare boxes of passenger buses. The payment system 70 is a computer system that manages recording of purchase and is, for example, a computer system that collects purchaser, purchase date and time, and purchase money by the use history of cashless payment and credit cards.

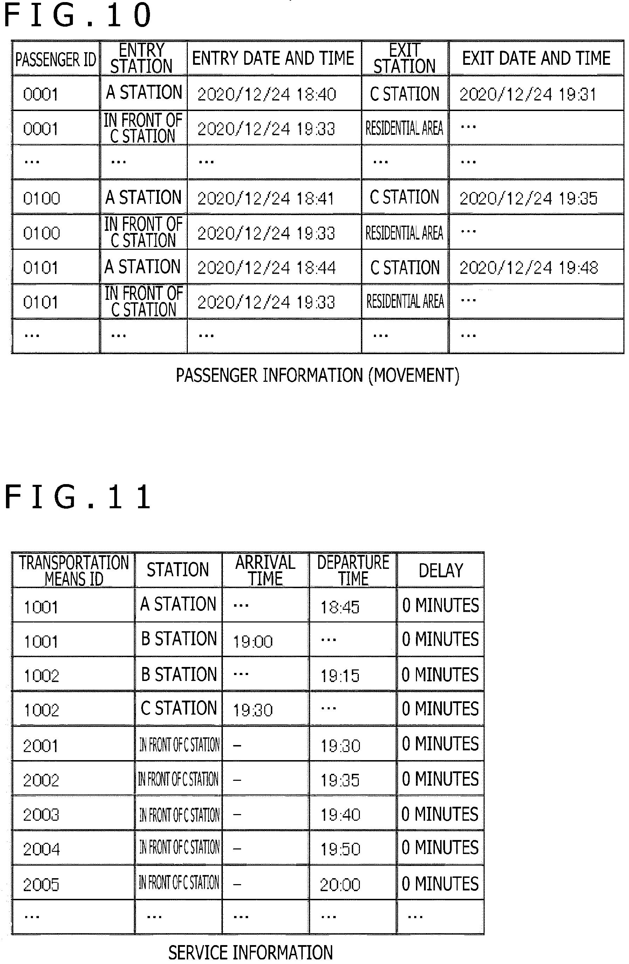

The service information acquiring section 13 acquires the service information from a service management system 80 and stores it in the service information accumulating section 16. The service information stored in the service information accumulating section 16 will be described later with reference to FIG. 11. The service management system 80 is a computer system used by a railway operator or a passenger bus operator in order to manage services of the railway or the bus.

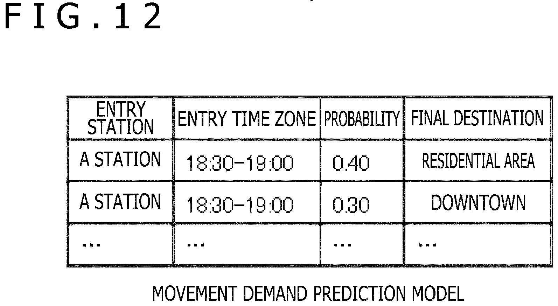

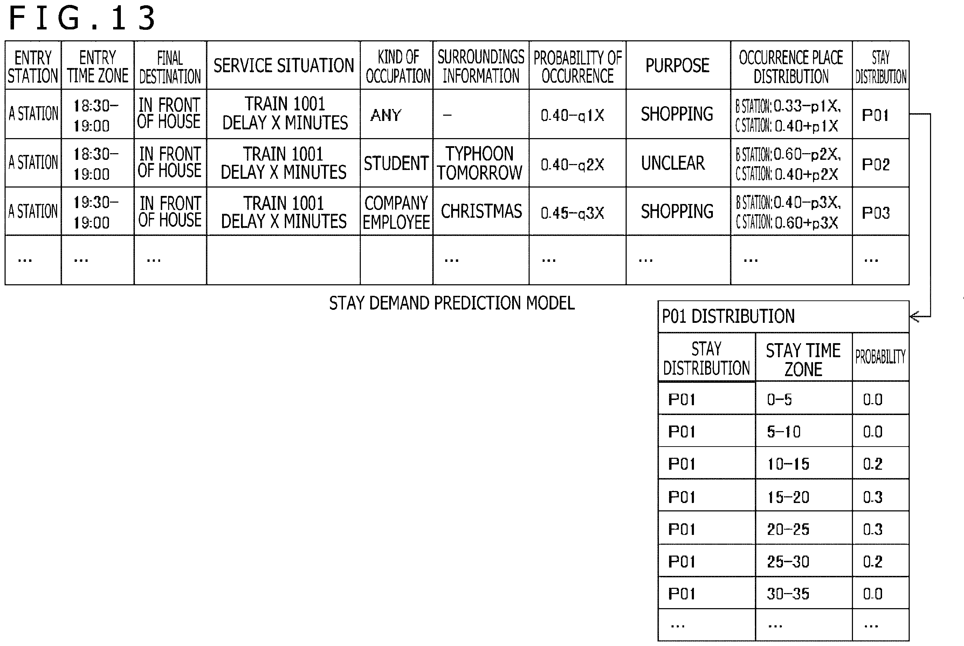

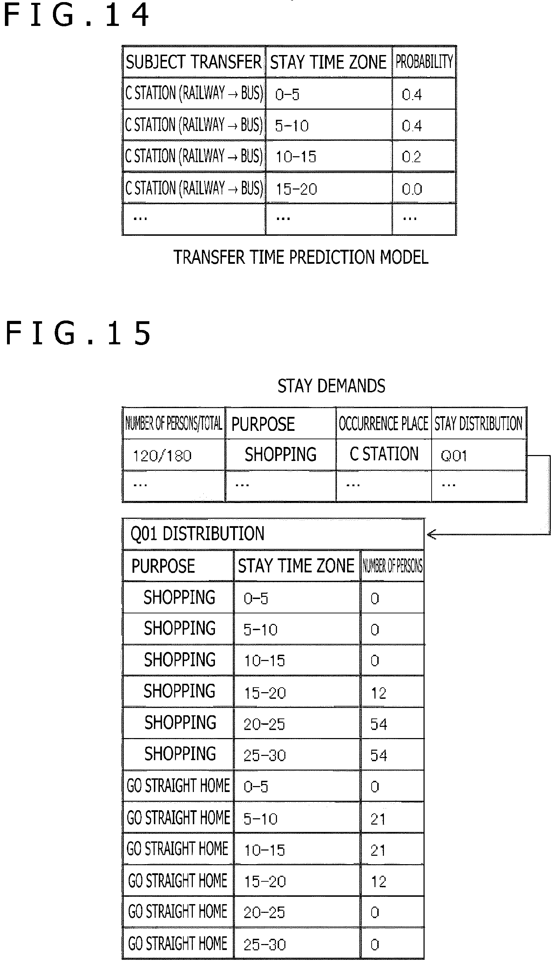

The prediction model estimating section 17 generates the movement demand prediction models, the stay demand prediction models, and the transfer time prediction models by using the data stored in the surroundings information accumulating section 14, the passenger information accumulating section 15, and the service information accumulating section 16 and stores them respectively in the movement demand prediction model accumulating section 18, the stay demand prediction model accumulating section 19, and the transfer time prediction model accumulating section 20. The movement demand prediction model stored in the movement demand prediction model accumulating section 18 will be described later with reference to FIG. 12. The stay demand prediction model stored in the stay demand prediction model accumulating section 19 will be described later with reference to FIG. 13. The transfer time prediction model stored in the transfer time prediction model accumulating section 20 will be described later with reference to FIG. 14.

The stay demand predicting section 21 inputs current-day data of the surroundings information, current-day data of the passenger information, and current-day data of the service information to the movement demand prediction models, the stay demand prediction models, and the transfer time prediction models and predicts the stay demands of passengers.

The service proposing section 22 creates a service proposal of trains or buses by using the stay demands predicted by the stay demand predicting section 21 and transmits it to the service management system 80.

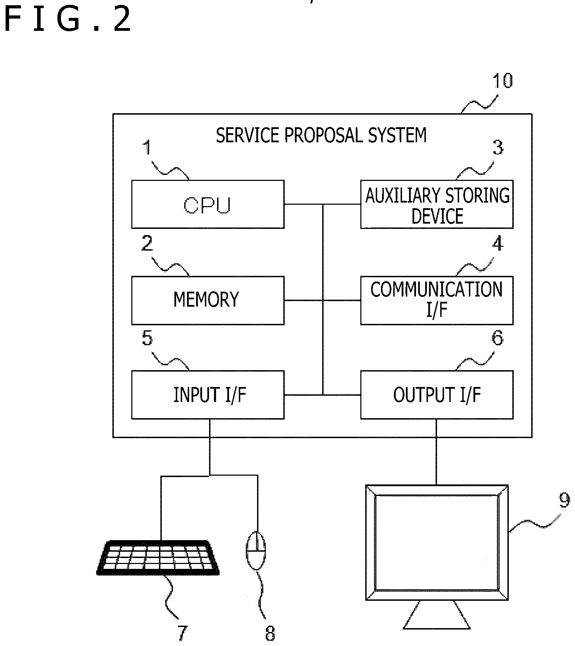

FIG. 2 is a block diagram illustrating a physical configuration of the service proposal system 10.

The service proposal system 10 includes a computer having a processor (CPU) 1, a memory 2, an auxiliary storing device 3, and a communication interface 4. The service proposal system 10 may have an input interface 5 and an output interface 6.

The processor 1 is a computing device that executes a program stored in the memory 2. Through execution of various programs by the processor 1, functions to be provided by the respective functional sections (for example, the surroundings information acquiring section 11, the passenger information acquiring section 12, the service information acquiring section 13, the prediction model estimating section 17, the stay demand predicting section 21, the service proposing section 22, and so forth) of the service proposal system 10 are implemented. Part of processing executed through execution of a program by the processor 1 may be executed by another computing device (for example, hardware such as an ASIC or an FPGA).

The memory 2 includes a ROM that is a non-volatile storage element and a RAM that is a volatile storage element. The ROM stores an invariable program (for example, BIOS) and so forth. The RAM is a high-speed, volatile storage element as exemplified by a DRAM (Dynamic Random Access Memory) and temporarily stores a program executed by the processor 1 and data used at the time of the execution of the program.

The auxiliary storing device 3 is a high-capacity, non-volatile storing device such as a magnetic storing device (HDD) or a flash memory (SSD), for example. Moreover, the auxiliary storing device 3 stores data used by the processor 1 at the time of execution of a program (for example, the surroundings information accumulating section 14, the passenger information accumulating section 15, the service information accumulating section 16, and so forth) and the program to be executed by the processor 1. That is, the program implements the respective functions of the service proposal system 10 by being read out from the auxiliary storing device 3, loaded into the memory 2, and executed by the processor 1.

The communication interface 4 is a network interface device that controls communication with another device (for example, the service management system 80) in accordance with a predetermined protocol.

The input interface 5 is an interface to which input devices such as a keyboard 7 and a mouse 8 are connected and that receives inputs from an operator. The output interface 6 is an interface to which output devices such as a display device 9 and a printer (illustration is omitted) are connected and that outputs an execution result of a program in a format that allows the operator to visually recognize the execution result. Note that a terminal connected by a network may provide the input interface 5 and the output interface 6.

The program to be executed by the processor 1 is provided to the service proposal system 10 through a removable medium (CD-ROM, flash memory, or the like) or a network and is stored in the non-volatile auxiliary storing device 3 that is a non-transitory storage medium. Hence, it is preferable for the service proposal system 10 to have an interface that reads in data from the removable medium.

The service proposal system 10 may operate on a physically one computer or on a virtual computer that is a computer system configured on a plurality of computers configured logically or physically and is constructed on a plurality of physical computer resources. For example, the surroundings information acquiring section 11, the passenger information acquiring section 12, the service information acquiring section 13, the prediction model estimating section 17, the stay demand predicting section 21, and the service proposing section 22 may be those that each operate on a separate physical or logical computer or may be those that operate on one physical or logical computer through a plurality of respective sections being combined.

Next, processing executed by the service proposal system 10 of the present embodiment will be described. In the processing to be described below, transfer from a train to a bus will be assumed. However, another transportation facility may be employed.

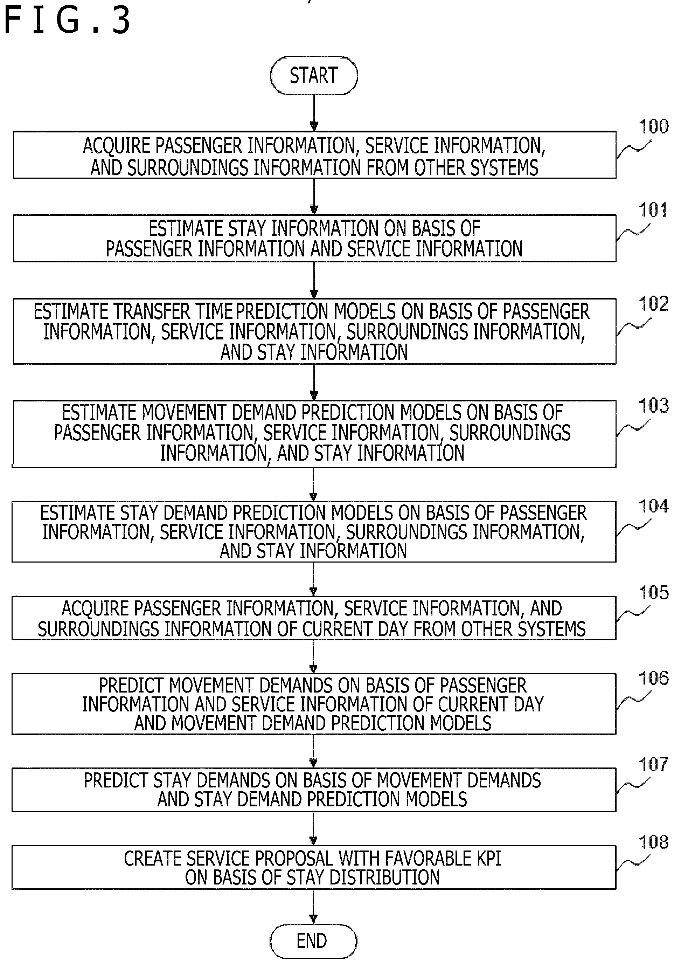

FIG. 3 is a flowchart of main processing executed by the service proposal system 10.

First, the surroundings information acquiring section 11 acquires the surroundings information from the open data system 50 and stores the acquired surroundings information in the surroundings information accumulating section 14. Further, the passenger information acquiring section 12 acquires the passenger information from the ticket gate system 60 and the payment system 70 and stores the acquired passenger information in the passenger information accumulating section 15. Further, the service information acquiring section 13 acquires the service information from the service management system 80 and stores the acquired service information in the service information accumulating section 16 (100).

Next, the prediction model estimating section 17 estimates the stay information on the basis of the passenger information stored in the passenger information accumulating section 15 and the service information stored in the service information accumulating section 16 (101). For example, the prediction model estimating section 17 matches the passenger information (movement) and the passenger information (consumption) by a passenger ID and estimates that a passenger is staying at a transfer station for shopping when a purchase action has been made during movement. Further, the prediction model estimating section 17 estimates that a passenger is staying at a transfer station for an unclear purpose when transfer is made in a length of time significantly beyond a standard transfer time.

Next, the prediction model estimating section 17 estimates the transfer time models on the basis of the surroundings information stored in the surroundings information accumulating section 14, the passenger information stored in the passenger information accumulating section 15, and the service information stored in the service information accumulating section 16 and stores them in the transfer time prediction model accumulating section 20 (102). For example, models in which attributes (place, transportation facility, time zone) of transfer are regarded as explanatory variables and the distribution of the stay time is regarded as an objective variable are created. The transfer time prediction models may be configured by a neural network that has executed learning with use of the passenger information and the service information as training data, or regression prediction models may be generated through multivariate analysis of the passenger information and the service information.

Next, the prediction model estimating section 17 estimates the movement demand prediction models on the basis of the surroundings information stored in the surroundings information accumulating section 14, the passenger information stored in the passenger information accumulating section 15, the service information stored in the service information accumulating section 16, and the stay information estimated in the step 101, and stores them in the movement demand prediction model accumulating section 18 (103). For example, the entry station and the entry time are regarded as explanatory variables, and the probability of the destination is regarded as an objective variable. Models in which the number of persons going to a specific destination is obtained are created. The movement demand prediction models may be configured by a neural network that has executed learning with use of the surroundings information, the passenger information, the service information, and the stay information as training data, or regression prediction models may be generated through multivariate analysis of the surroundings information, the passenger information, the service information, and the stay information.

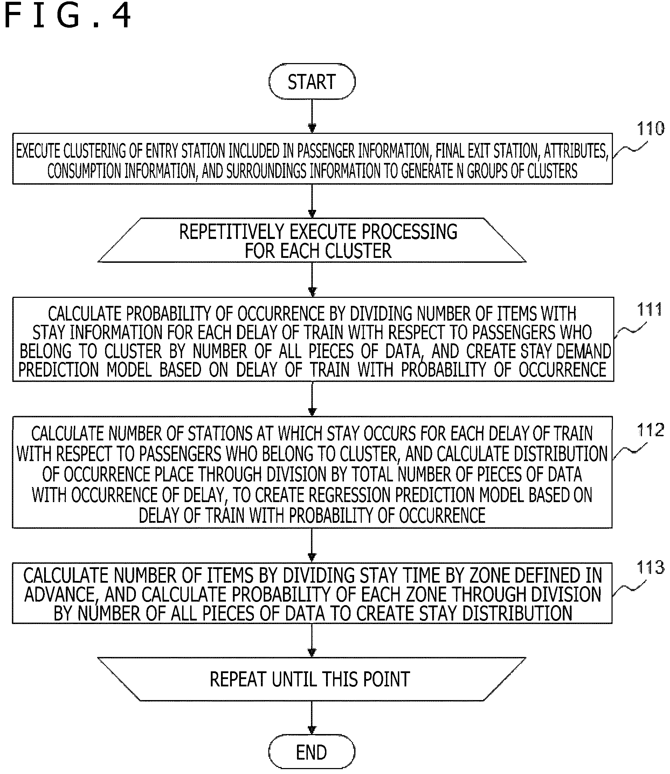

Next, the prediction model estimating section 17 estimates the stay demand prediction models on the basis of the surroundings information stored in the surroundings information accumulating section 14, the passenger information stored in the passenger information accumulating section 15, the service information stored in the service information accumulating section 16, and the stay information estimated in the step 101, and stores them in the stay demand prediction model accumulating section 19 (104). The estimation method of the stay demand prediction models will be described later with reference to FIG. 4. The stay demand prediction models may be configured by a neural network that has executed learning with use of the surroundings information, the passenger information, the service information, and the stay information as training data, or regression prediction models may be generated through multivariate analysis of the surroundings information, the passenger information, the service information, and the stay information.

Next, the surroundings information acquiring section 11 acquires the surroundings information of the current day from the open data system 50 and stores the acquired surroundings information in the surroundings information accumulating section 14. Further, the passenger information acquiring section 12 acquires the passenger information of the current day from the ticket gate system 60 and the payment system 70 and stores the acquired passenger information in the passenger information accumulating section 15. Further, the service information acquiring section 13 acquires the service information of the current day from the service management system 80 and stores the acquired service information in the service information accumulating section 16 (105).

Next, the stay demand predicting section 21 inputs current-day data of the service information to the movement demand prediction models to predict movement demands of passengers (106).

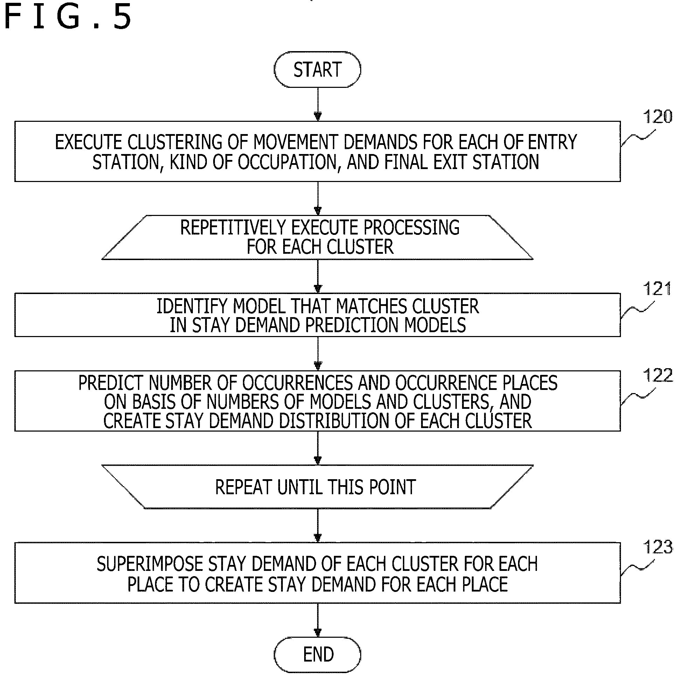

Next, the stay demand predicting section 21 inputs the predicted stay demands to the stay demand prediction models to predict stay demands of passengers (107). Stay demand prediction processing will be described later with reference to FIG. 5, and the predicted stay demands will be described later with reference to FIG. 15.

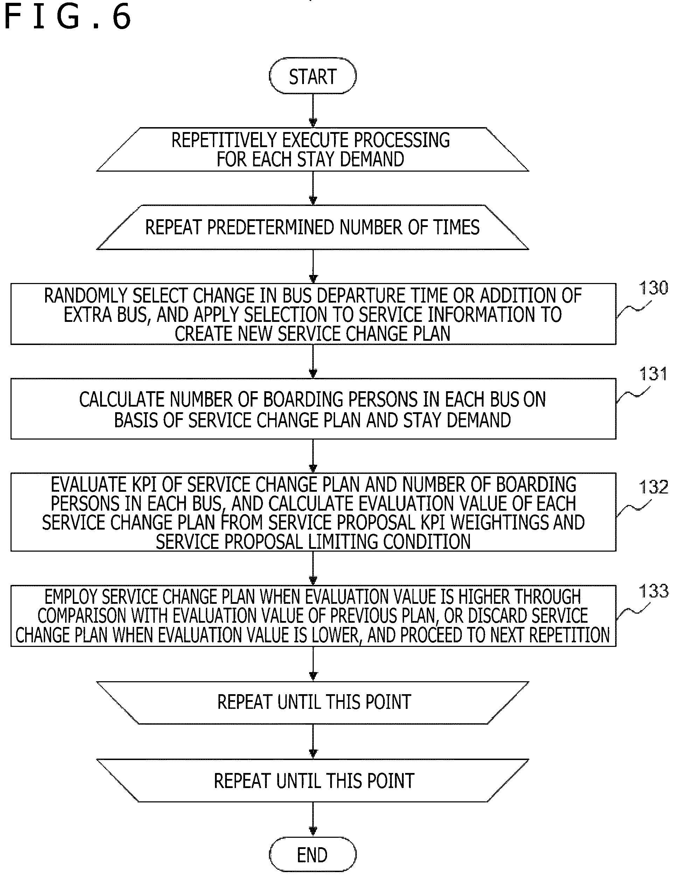

Next, the service proposing section 22 creates a service proposal with a favorable KPI on the basis of the distribution of the predicted stay demands (108). Service proposal creation processing will be described later with reference to FIG. 6. By the service proposal with a favorable KPI, the degree of congestion of the transportation facility can be equalized and the wait time at the time of transfer by passengers can be decreased.

FIG. 4 is a flowchart of stay demand prediction model estimation processing.

First, the prediction model estimating section 17 executes clustering of the entry station included in the passenger information (movement), the final exit station in a series of movement, the passenger information (attributes), the passenger information (consumption), and the surroundings information to generate N groups of clusters (110), and repetitively executes processing of steps 111 to 113 for each cluster.

Thereafter, the prediction model estimating section 17 calculates the probability of occurrence by dividing the number of items with the stay information for each delay of a train with respect to the passengers who belong to the cluster by the number of all items with the stay demands of the passengers who belong to the cluster, and creates a prediction model of the stay demands based on the delay of a train with the calculated probability of occurrence (111) .

Next, the prediction model estimating section 17 calculates the number of stations at which a stay is to occur for each delay of a train with respect to the passengers who belong to the cluster, and calculates the occurrence place distribution by dividing the number of items of each station at which a stays occurs by the number of all pieces of data with the occurrence of a stay, to create a regression prediction model based on the delay of a train with the probability of occurrence (112).

Next, the prediction model estimating section 17 calculates the number of items by dividing the stay time by a zone defined in advance and calculates the probability of each zone through dividing the calculated number of stays by the total number of stays, to create the stay demands (113) .

The processing of the above steps 111 to 113 is executed for each cluster, and the processing is repeated until the processing is completed for all clusters.

FIG. 5 is a flowchart of the stay demand prediction processing.

First, the stay demand predicting section 21 executes clustering of the movement demands predicted in the step 106, for each combination of the entry station, the kind of occupation, and the final exit station, to generate N groups of clusters (120), and repetitively executes processing of steps 121 and 122 for each cluster.

Thereafter, the stay demand predicting section 21 identifies the model that matches the cluster in the stay demand prediction models (121).

Next, the stay demand predicting section 21 predicts the number of occurrence of stays and the occurrence places of the stays on the basis of the numbers of models and clusters and creates the stay demand distribution of each cluster (122).

The processing of the above steps 121 and 122 is executed for each cluster, and the processing is repeated until the processing is completed for all clusters.

Thereafter, the stay demand predicting section 21 superimposes the stay demand of each cluster for each place to create the stay demand for each place (123).

FIG. 6 is a flowchart of the service proposal creation processing.

First, the service proposing section 22 repetitively executes processing of steps 130 to 133 a predetermined number of times for each predicted stay demand.

Thereafter, the service proposing section 22 applies a change in the bus departure time or addition of an extra bus, which is randomly selected, to service information to create a new service change plan (130).

Next, the service proposing section 22 calculates the number of boarding persons in each bus on the basis of the created service change plan and the predicted stay demand (131).

Next, the service proposing section 22 evaluates the KPI of the created service change plan and the number of boarding persons in each bus and calculates an evaluation value of each service change plan from the service proposal KPI weightings and the service proposal limiting condition (132). The evaluation value is obtained by totaling solutions each obtained by multiplying a respective one of the KPI weightings and a respective one of KPI evaluation values to make one value with use of the linear weighted sum method, for example. When the service change plan does not satisfy the service limiting condition, a predetermined penalty is subtracted from the evaluation value. The penalty may be adjusted by being set to a very large value (or infinity) with respect to the service limiting condition that should definitely be obeyed and a finite value with respect to the service limiting condition that should be obeyed as much as possible.

Next, the service proposing section 22 employs the current service change plan when the evaluation value of the current service change plan is higher than the evaluation value of the previous service change plan or discards the current service change plan when the evaluation value of the current service change plan is lower than the evaluation value of the previous service change plan, and proceeds to the next repetition (133).

The processing of the above steps 130 to 133 is repeated a predetermined number of times, and the service change plan with a high evaluation value is selected for each stay demand. This processing is executed for each stay demand, and the processing is repeated until the processing is completed for all stay demands.

FIG. 7 is a diagram illustrating a configuration example of the surroundings information stored in the surroundings information accumulating section 14. The surroundings information is data concerning a transportation line (for example, weather forecast and information on events on the transportation line) acquired from the open data system 50, is used to predict the movement demands, and includes the date, the range, and the contents. The date is the date on which an event described in the field of the contents occurs. The range is the range affected by relevant event. The contents are the contents of the relevant event.

Next, a configuration example of the passenger information stored in the passenger information accumulating section 15 will be described. The passenger information is divided into the passenger information (attributes) that represents attributes of passengers, the passenger information (consumption) that represents purchase actions by passengers, and the passenger information (movement) that represents movement of passengers. However, the passenger information may be configured by one table in such a manner as to be associated with the passenger ID.

FIG. 8 is a diagram illustrating a configuration example of the passenger information (attributes) stored in the passenger information accumulating section 15. The passenger information (attributes) is information that represents attributes of passengers. It suffices for the passenger information (attributes) to be information registered at the time of purchase of a transportation-system IC card, for example. The passenger information (attributes) includes the passenger ID and the kind of occupation. Age, sex, address, and so forth may also be recorded in the passenger information (attributes) when being information effective for classification of actions of passengers.

FIG. 9 is a diagram illustrating a configuration example of the passenger information (consumption) stored in the passenger information accumulating section 15. The passenger information (consumption) is information that is acquired from the payment system 70 and that represents purchase actions by passengers. It suffices for the passenger information (consumption) to be the use history of cashless payment and credit cards, for example. The passenger information (consumption) includes the passenger ID, the date and time, and the shop. The date and time is the date and time when a purchase action by a passenger was made. The shop is the name of the shop where a purchase action by a passenger was made. Purchase money and so forth may be recorded in the passenger information (consumption) when being information effective for classification of purchase actions of passengers.

FIG. 10 is a diagram illustrating a configuration example of the passenger information (movement) stored in the passenger information accumulating section 15. The passenger information (movement) is information that is acquired from the ticket gate system 60 and represents movement by passengers. It suffices for the passenger information (movement) to be OD data such as entry/exit data obtained by ticket gate machines of a railway and getting-on/off data obtained by fare boxes of passenger buses for example. The passenger information (movement) includes the passenger ID, the entry station, the entry date and time, the exit station, and the exit date and time. The entry station and the entry date and time are the place and the time where and when a passenger got on transportation means. The exit station and the exit date and time are the place and the time where and when a passenger got off the transportation means.

FIG. 11 is a diagram illustrating a configuration example of the service information stored in the service information accumulating section 16. The service information is information concerning predetermined service times of trains and buses created by a railway operator and a passenger bus operator, that is acquired from the service management system 80, and is data of each day including the transportation means ID, the station, the arrival time, the departure time, and the delay. The transportation means ID is unique identification information of each train or bus. The station is the place (station or bus stop) where the relevant train or bus arrives and departs. The arrival time is the arrival time of the relevant train or bus, and the departure time is the departure time of the relevant train or bus. The delay is the difference between the actual departure time of the relevant train or bus and the scheduled departure time thereof.

FIG. 12 is a diagram illustrating an example of the movement demand prediction model stored in the movement demand prediction model accumulating section 18. In the movement demand prediction model, the entry station and the entry time zone are regarded as explanatory variables, and the final destination and the probability of movement to the relevant final destination are regarded as objective variables.

FIG. 13 is a diagram illustrating an example of the stay demand prediction model stored in the stay demand prediction model accumulating section 19. In the stay demand prediction model, the entry station, the entry time zone, the final destination, the service situation, the attribute (kind of occupation) of passengers, and the surroundings information are regarded as explanatory variables, and the probability of occurrence of a stay, the purpose of a stay, the occurrence place distribution, and the stay demands are regarded as objective variables. The probability of occurrence is the probability of occurrence of the relevant stay. The occurrence place distribution is sets of the place and the probability at which the relevant stay occurs. The stay demands are represented by a link to another piece of information.

FIG. 14 is a diagram illustrating an example of the transfer time prediction model stored in the transfer time prediction model accumulating section 20. In the transfer time prediction model, the subject transfer is regarded as an explanatory variable, and the stay time zone and the probability of the relevant zone are regarded as objective variables.

FIG. 15 is a diagram illustrating an example of the stay demands predicted by the stay demand predicting section 21. The stay demands are represented by the distribution of the number of persons staying for each occurrence place and include links to the number of persons staying/the total number of persons making a transfer, the purpose of a stay, the occurrence place of a stay, and the stay distribution. The stay distribution represents the number of persons for each combination of the purpose of a stay and the stay time zone.

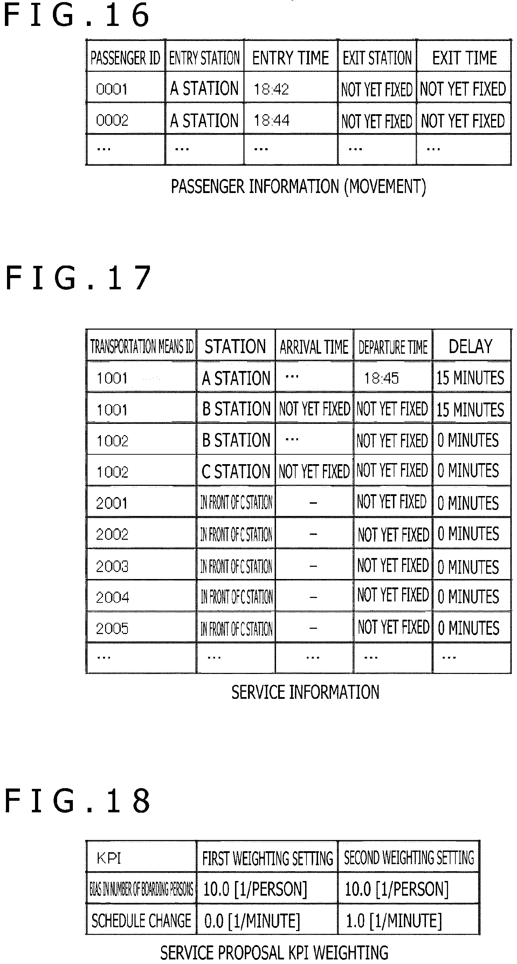

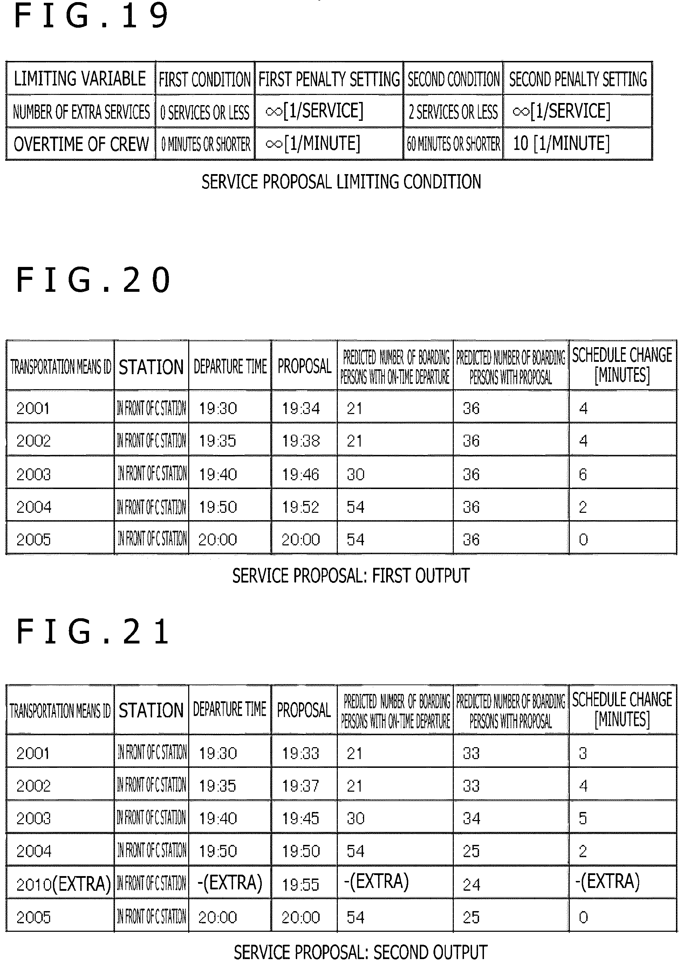

Next, current-day data used for prediction will be described with reference to FIGS. 16 and 17, and setting parameters will be described with reference to FIGS. 18 and 19.

FIG. 16 is a diagram illustrating a configuration example of the current-day data of the passenger information (movement) stored in the passenger information accumulating section 15. The current-day data of the passenger information (movement) is in the same format as the passenger information (movement) illustrated in FIG. 10. However, the entry/exit data is data of the current day. Thus, the entry time is used instead of the entry date and time, and the exit time is used instead of the exit date and time. The current-day data of the passenger information (movement) is used for prediction of the stay demands and is hence data of passengers who are currently moving, and the exit station and the exit time are "not yet fixed." The other is the same as the passenger information (movement) illustrated in FIG. 10.

FIG. 17 is a diagram illustrating a configuration example of the current-day data of the service information stored in the service information accumulating section 16. The current-day data of the service information is the same format as the service information illustrated in FIG. 11 but is present service information of the current day. Thus, the arrival and departure times are "not yet fixed" after the current time. The other is the same as the service information illustrated in FIG. 11.

FIG. 18 is a diagram that explains an example of service proposal KPI weighting factors. The weighting factors indicate the KPI on which the service proposal places weight, make the bias in the number of boarding persons smaller to seek dispersion of congestion, and make the wait time of passengers shorter by a schedule change. For example, in the schedule change, a numerical value is larger in the second weighting setting, making it more likely for a service proposal with a small amount of schedule change to be output.

FIG. 19 is a diagram that explains an example of the service proposal limiting condition. In the service proposal limiting condition, the number of extra services and the overtime of the crew are set. In the first condition, no penalty is given when the number of extra services is zero. However, when the number of extra services exceeds zero, the penalty is given, and a service proposal in which an extra service is set is not output. On the other hand, in the second condition, no penalty is given when the number of extra services is equal to or smaller than two. However, when the number of extra services exceeds two, the penalty is given, and a service proposal in which zero to two extra services are set is output. Furthermore, in terms of the overtime of the crew, overtime work is not permitted in the first condition. In the second condition, no penalty is given for overtime work for 60 minutes or shorter, but the predetermined penalty is given for overtime work over 60 minutes.

FIGS. 20 and 21 are diagrams illustrating output examples of the service proposal. FIG. 20 illustrates the first output example in the case in which the first weighting setting and the first condition are selected. FIG. 21 illustrates the second output example in the case in which the second weighting setting and the second condition are selected. The illustrated output examples may be displayed on the display device 9 of the service proposal system 10 or may be output from the communication interface 4 in a predetermined data interchange format. In the first output example illustrated in FIG. 20, the schedule change weighting is zero under the first weighting setting, and thus, the schedule change time is set long to make the wait time short. In the second output example illustrated in FIG. 21, the schedule change weighting is one under the second weighting setting; thus, the schedule change time becomes short, and extra services are set under the second condition.

As described above, according to the embodiment of the present invention, demands of people in the middle of movement can be estimated with high accuracy, and a service change plan according to the demands can be proposed. Further, such transportation control to optimize the KPI of dispersion of congestion or the like to make alignments with the stay demands of people that change according to the situation becomes possible.

The present invention is not limited to the above-described embodiment, and various modification examples and equivalent configurations in the gist of the scope of claims attached are included therein. For example, the above-described embodiment has been explained in detail in order to explain the present invention in an easy-to-understand manner, and the present invention is not necessarily limited to one including all configurations explained. Moreover, part of a configuration of a certain embodiment may be replaced by a configuration of another embodiment. Further, a configuration of another embodiment may be added to a configuration of a certain embodiment. Further, regarding part of a configuration of each embodiment, addition, deletion, and substitution of another configuration may be executed.

Further, regarding the above-described respective configurations, functions, processing sections, processing means, and so forth, part or all of them may be implemented by hardware through, for example, design by an integrated circuit, or the like, or may be implemented by software through interpretation and execution of a program that implements the respective functions by a processor.

The program that implements the respective functions and information such as tables and files can be stored in a storing device such as a memory, a hard disk, or an SSD (Solid State Drive) or a recording medium such as an IC card, an SD card, or a DVD.

Further, as control lines and information lines, those that are deemed as necessary in terms of explanation are illustrated, and all control lines and information lines necessary in terms of mounting are not necessarily illustrated. It may be understood that almost all configurations are mutually connected in practice.

## Claims

1. A service proposal system that creates a service proposal of transportation means, the service proposal system comprising:
a computing device that executes predetermined processing; and
a storing device accessible by the computing device,
wherein the computing device has a stay demand predicting section that predicts stay demands of passengers at a time of transfer, by using a stay demand prediction model, and
the computing device has a service proposing section that generates a service proposal for which a service proposal evaluation value is favorable, on the basis of the predicted stay demands.

2. The service proposal system according to claim 1, wherein
the stay demand predicting section predicts stay demands of passengers at the time of transfer, for each purpose of a stay.

3. The service proposal system according to claim 1, wherein
the computing device has a prediction model estimating section that generates the stay demand prediction model in which an entry station and an entry time zone are regarded as explanatory variables and a final destination and probability of movement to the relevant final destination are regarded as objective variables, by using surroundings information, passenger information, and service information,
the surroundings information includes information concerning a transportation line of the transportation means for which the service proposal is created,
the passenger information includes an entry station, a final exit station, attributes, and consumption information of passengers, and
the service information includes predetermined service times and delay.

4. The service proposal system according to claim 1, wherein,
in the stay demand prediction model, arrival and departure times, a place, and a purpose of passengers and delay of service are regarded as explanatory variables, and probability of a place and a time of occurrence of a stay for satisfying a purpose is regarded as an objective variable.

5. The service proposal system according to claim 1, wherein
the service proposing section
applies a change in a departure time of services or addition of an extra service, which is randomly selected, to service information to create a service change plan,
calculates the number of boarding persons in each service on the basis of the created service change plan and the predicted stay demands,
evaluates an index of the created service change plan and the calculated number of boarding persons in each service, and calculates an evaluation value of each service change plan from the service proposal evaluation value to which a predetermined weighting has been applied and a service proposal limiting condition, and
selects the service change plan for which the calculated evaluation value is high.

6. The service proposal system according to claim 1, wherein
the service proposal evaluation value is at least one of bias in the number of boarding persons and a transfer wait time of passengers.

7. The service proposal system according to claim 1, wherein
the service proposing section generates the service proposal for which the service proposal evaluation value is favorable, under a service proposal limiting condition, by using the stay demand prediction model, and
the service proposal limiting condition is the maximum number of operable extra services and overtime of a crew.

8. A service proposal creation method executed by a service proposal system for transportation means,
the service proposal system including a computing device that executes predetermined processing and a storing device accessible by the computing device,
wherein the service proposal creation method comprises
a stay demand predicting section in which the computing device predicts stay demands of passengers at a time of transfer, by using a stay demand prediction model, and
a service proposing section in which the computing device generates a service proposal for which a service proposal evaluation value is favorable, on the basis of the predicted stay demands.
